# EUROPEAN PATENT APPLICATION

(11) **EP 1 170 340 A1**
(43) Date of publication of application: **09.01.2002**
(21) Application number: 01305396.2
(22) Date of filing: 21.06.2001
(51) Int. Cl.: C09D 5/00

(54) **Wear-resistant coating composition and method for producing a coating**

(30) Priority: 05.07.2000 US 216234 P
(71) Applicant: ROHM AND HAAS COMPANY, Philadelphia, Pennsylvania 19106-2399 (US)
(72) Inventor: Brown, Ward Thomas, North Wales, Pennsylvania 19454 (US)
(74) Representative: Kent, Venetia Katherine

(57) **Abstract**

Coating compositions, in particular wear-resistant traffic marking compositions, and a method for producing wear-resistant traffic marking compositions are disclosed. In particular, traffic-marking compositions are disclosed that include an autoxidizable alkoxysilane and a polymer that, optionally, may bear autoxidizable groups or groups reactive with compounds resulting from the oxidation of an autoxidizable alkoxysilane.

## Description

The present invention relates to a coating composition and a method for producing a coating on a substrate surface. The present invention relates to a coating composition containing, more specifically, an autoxidizable alkoxysilane and a binder polymer. In particular, the present invention relates to a wear-resistant traffic marking composition and a method for applying the composition to a road surface The present invention also relates to the composition of the autoxidizable alkoxysilane.

Used herein, "traffic marking composition" is a particular type of "coating composition", and "road surface" is a particular type of "substrate surface". Traffic marking paints are, for example, applied to roads, parking lots, and school playgrounds, the surfaces of which are typically concrete and asphalt. The resultant traffic markings instruct users and demarcate traffic lanes, parking spaces, and other restricted areas. As the replacement of solvent-borne paints continues in order to minimize air pollution, aqueous traffic marking compositions having a useful combination of dried film properties have been sought. One of the most important properties of traffic marking compositions is the wear-resistance exhibited by the dried coating under use conditions, i.e., the useful lifetime of the composition.

The term "road" is used herein as a generic term and it includes any indoor or outdoor solid surface which is or may be exposed to pedestrians, moving vehicles, tractors, or aircraft continuously, constantly or intermittently. Some non-limiting examples of a "road" include highways, streets, driveways, sidewalks, runways, taxiing areas, tarmac areas, parking lots, rooftops, indoor floors (such as factory floors, inside a shopping mall, etc), and playgrounds. The surface material may be masonry, tar, asphalt, resins, concrete, cement, stone, stucco, tiles, wood, polymeric materials and combinations thereof. It is also within the scope of the invention to apply the coating over another one or more layers of fresh or aged coating or marking already applied on the surface.

Related art describes the potential utility of films derived from vinyl polymers containing pendant acetoacetate groups when crosslinked by exposure to air preferably in the presence of cobalt salts [Spoor, Die Angewandte Makromolekulare Chemie 38, 160 (1968)]. However, this technology is inadequate because the free radical flux is insufficient to cure the polymeric films fast enough to be practical at ambient temperatures.

US-A-5,559,192 discloses an autoxidizable polymer composition which contains an acetoacetate functional polymer and an autoxidizable material. While these compositions cure quickly, they are not effective at increasing the durability of traffic marking paints, and may be deficient in properties when used as coatings for other applications.

Surprisingly, I have found that incorporation of alkoxysilanes bearing one or more autoxidizable groups into a coating composition including at least one binder polymer renders coatings derived therefrom highly resistant to wear. These wear resistant coatings are particularly useful as traffic marking compositions. The coating composition may, optionally, contain polymer bearing autoxidizable groups. Although the coating composition may be solvent based, it has also been possible to overcome the problems of solvent based systems, cited herein above, by preparing waterborne coating compositions containing autoxidizable alkoxysilanes. It was particularly surprising that the water sensitive autoxidizable alkoxysilanes enhanced wear resistance of the traffic markings resulting from application of aqueous compositions to road surfaces.

The present invention relates to a coating composition including:
(a) at least one autoxidizable alkoxysilane; and
(b) at least one binder polymer.

The present invention further relates to a coating composition wherein the binder polymer is an aqueous emulsion polymer.

In another aspect of the present invention, the coating composition comprises 0.01 to 25% by weight of said autoxidizable alkoxysilane, based on the dry weight of said binder polymer.

In yet another aspect of the present invention, the autoxidizable alkoxysilane has the formula Si(R₁)ₐ(R₂)_{b}(OR₃)_{4-a-b},
wherein
(a) R₁ is an organic residue containing at least one -CH=CHCH₂CH=CH- or -CH=CH-CH=CH- group and is bound to the silicon via a carbon atom;
(b) R₂ is an organic residue bound to the Si via a C atom;
(c) R₃ is an organic residue;
(d) "a" is an integer from 1 to 3;
(e) "b" is an integer from 0 to 2; and
(f) the sum of "a" and "b" is an integer from 1 to 3.

In a still further aspect of the present invention, the autoxidizable alkoxysilane has the formula Si(R₁)ₐ(R₂)_{b}(OR₃)_{4-a-b},
wherein:
(a) R₁ is an organic residue containing at least one dicyclopentenyl group and is bound to the silicon via a carbon atom;
(b) R₂ is an organic residue bound to the silicon via a carbon atom;
(c) R₃ is an organic residue;
(d) "a" is an integer from 1 to 3;
(e) "b" is an integer from 0 to 2; and
(f) "a" and "b" is an integer from 1 to 3.

In addition, the binder polymer of the present invention may contain at least one functional group that is autoxidizable or reactive with compounds formed during the oxidation of the autoxidizable alkoxysilane. The 1,3-dicarbonyl group is an autoxidizable group that may be attached to the binder polymer. The 1,3-dicarbonyl group may be derived from acetoacetoxyethyl methacrylate.

The present invention is also directed to a method for producing a coating composition on a substrate surface, utilizing the compositional variants just described.

Finally, the present invention relates to the composition of an autoxidizable silane having the formula Si(R₁)ₐ(R₂)_{b}(OR₃)_{4-a-b},
wherein
(a) R₁ is an organic residue containing at least one autoxidizable group and is bound to the silicon via a carbon atom;
(b) R₂ is an organic residue bound to the Si via a C atom;
(c) R₃ is an organic residue;
(d) "a" is an integer from 1 to 3;
(e) "b" is an integer from 0 to 2; and
(f) the sum of "a" and "b" is an integer from 1 to 3.

The composition of the autoxidizable silane may include -CH=CHCH₂CH=CH- or -CH=CH-CH=CH- as the autoxidizable group. The autoxidizable group may, specifically, be cyclopentenyl.

It is also within the scope of the present invention to make multiple applications of the coating composition to a single portion of substrate surface. It is further possible to apply the coating composition of the present invention along with other coating compositions that do not contain autoxidizable alkoxysilanes, and along with other components such as retroreflective glass spheres, and absorbent particles such as, for example, organic super absorbent polymers, ion-exchange resins, hollow sphere polymers, molecular sieves, talcs, inorganic absorbers, porous carbonaceous materials, non-porous carbonaceous materials, and mixtures thereof.

The polymer of the present invention acts as a film forming binder in the coating composition and is referred to herein as the "binder polymer". The specific method by which a binder polymer is prepared is not of particular importance to the present invention. Binder polymers useful in the compositions of the present invention may be prepared via bulk and solution polymerization, and by aqueous dispersion, suspension, and emulsion polymerization, or any other method that would produce the desired polymer dispersed in water, with or without miscible co-solvent, or capable of being dispersed in water, with or without co-solvent. A preferred method for preparing the binder polymers to be used in wear-resistant coating compositions of the present invention is aqueous emulsion polymerization. Polymers thus prepared are usually stabilized by adding anionic, nonionic, cationic, or amphoteric surfactants, or by the incorporation of anionic or cationic moieties into the polymer itself during synthesis. The emulsion polymerization can be carried out by a number processes such as those described in Blackley, D. C. *Emulsion Polymerisation*; Applied Science Publishers: London, 1975; Odian, G. *Principles of Polymerization*; John Wiley & Sons: New York, 1991; *Emulsion Polymerization of Acrylic Monomers;* Rohm and Haas, 1967.

The aqueous emulsion polymer useful in the present invention is an addition polymer. The monomers from which the addition polymer is formed are ethylenically-unsaturated. The aqueous emulsion polymer composition may be selected and the polymer prepared by conventional techniques known to those of ordinary skill in the art. The polymer may contain, as polymerized units, one or more ethylenically unsaturated monomers. Examples of these ethylenically unsaturated monomers include: C₁-C₂₂ linear or branched chain alkyl (meth)acrylates, bornyl (meth)acrylate, isobornyl (meth)acrylate, and the like; hydroxyethyl (meth)acrylate, hydroxypropyl (meth)acrylate; (meth)acrylamide or substituted (meth)acrylamides; styrene or substituted styrenes; butadiene; vinyl acetate or other vinyl ester; N-butylaminoethyl (meth)acrylate, N,N-di(methyl)aminoethyl (meth)acrylate; monomers containing α,β-unsaturated carbonyl functional groups such as fumarate, maleate, cinnamate and crotonate; and (meth)acrylonitrile. Used herein, the word fragment "(meth)acryl" refers to both "methacryl" and "acryl". For example, (meth)acrylic acid refers to both methacrylic acid and acrylic acid, and methyl (meth)acrylate refers to both methyl methacrylate and methyl acrylate.

Acid-functional monomers may also be present in the aqueous emulsion polymer as polymerized units at preferably 0-10%, more preferably 0.5-5%, and most preferably 1-3%, all by weight, based on the weight of the dry emulsion polymer. Acid-functional monomers useful in the present invention include, for example, (meth)acrylic acid, itaconic acid, crotonic acid, phosphoethyl (meth)acrylate, sulfoethyl (meth)acrylate, 2-acrylamido-2-methyl-1-propanesulfonic acid, fumaric acid, maleic anhydride, monomethyl maleate, and maleic acid.

Optionally, a low level of a multi-ethylenically unsaturated monomer may be incorporated into the polymer to provide crosslinking. The level of multi-ethylenically unsaturated monomer may be 0-5% by weight, based on the weight of the dry emulsion polymer. The upper limit is typically determined by the point at which film formation becomes impaired. Useful multi-ethylenically unsaturated monomers include, for example, allyl (meth)acrylate, diallyl phthalate, 1,4-butylene glycol di(meth)acrylate, 1,6-hexanediol di(meth)acrylate, and trimethylolpropane tri(methyl)acrylate.

Optionally, the polymer may contain functional groups that are autoxidizable or reactive with compounds formed during the oxidation of an autoxidizable alkoxysilane, such as, for example, 1,3-dicarbonyl groups, -CH=CHCH₂CH=CH- groups, alkenyl groups, (meth)acrylate groups, vinylether groups, and/or dicyclopentenyl groups. Acetoacetoxyethyl (meth)acrylate is an example of a monomer that, upon incorporation into the polymer, provides 1,3-dicarbonyl functionality. Generally, when an autoxidizable monomer is incorporated into a polymer, it is incorporated at a level of 0.1 to 25 percent by weight, based on the dry weight of the binder polymer. Preferred is a level of autoxidizable monomer in the range 0.1 to 10%, more preferred, 0.5 to 5%, and, most preferred, 1.0 to 5%, all by weight, based on dry polymer solids.

Conventional surfactants may be used to stabilize the emulsion polymerization systems before, during, and after polymerization of monomers. These conventional surfactants will usually be present at levels of 0.1 percent to 6 percent by weight based on the weight of total monomer. At least one anionic, nonionic, or amphoteric surfactant may be used, or mixtures thereof. Examples of anionic emulsifiers include sodium lauryl sulfate, sodium dodecyl benzene sulfonate, dioctylsulfosuccinate, sodium polyoxyethylene lauryl ether sulfate, and sodium salt of *tert*-octylphenoxyethoxypoly(39)ethoxyethyl sulfate. Examples of nonionic surfactants include glycerol aliphatic esters, oleic acid monoglyceride, polyoxyethylene aliphatic esters, polyoxyethylene glycol monostearate, polyoxyethylene cetyl ether, polyoxyethylene glycol monolaurate, polyoxyethylene glycol monooleate, polyoxyethylene glycol stearate, polyoxyethylene higher alcohol ethers, polyoxyethylene lauryl ether, polyoxyethylene nonylphenol ether, polyoxyethylene octylphenol ether, polyoxyethylene oleyl ether, polyoxyethylene stearyl ether, polyoxyethylenesorbitan aliphatic esters, polyoxyethylenesorbitan monolaurate, polyoxyethylenesorbitan monooleate, polyoxyethylenesorbitan monopalmitate, polyoxyethylenesorbitan monostearate, polyoxyethylenesorbitan trioleate, polyoxyethylenesorbitan tristearate, polyoxyethylenesorbitol tetraoleate, stearic acid monoglyceride, *tert*-octylphenoxyethylpoly(39)ethoxyethanol, and nonylphenoxyethylpoly(40)ethoxyethanol.

Amphoteric surfactants may also be utilized solely, or in combination with anionic surfactants, nonionic surfactants, or mixtures thereof, to stabilize particles of the polymer during and after aqueous emulsion polymerization, or other dispersion polymerizations. For the purpose of stabilizing particles of polymer in aqueous systems, amphoteric surfactants may be used at levels of 0.1 percent to 6 percent by weight based on the weight of total monomer. Useful classes of amphoteric surfactant include aminocarboxylic acids, amphoteric imidazoline derivatives, betaines, and macromolecular amphoteric surfactants. Amphoteric surfactants from any of these classes may be further substituted with fluorocarbon substituents, siloxane substituents, or combinations thereof. Useful amphoteric surfactants can be found in Amphoteric Surfactants, ed. B.R. Bluestein and C.L. Hilton, Surfactant Series Vol. 12 Marcel Dekker NY, NY(1982).

Alternatively, all, or a portion, of the surfactant activity may be provided by initiator fragments, such as those of persulfates, when the fragments become incorporated into the polymer chain.

Incorporating monomers bearing ionic groups into the polymer chain is yet another alternative method of stabilizing the emulsion polymer system. Those monomers bearing ionic groups include the acid-functional monomers described hereinabove. Initiation of emulsion polymerization may be carried out by the thermal decomposition of free radical precursors, also called initiators herein, which are capable of generating radicals suitable for initiating addition polymerization. Suitable thermal initiators such as, for example, inorganic hydroperoxides, inorganic peroxides, organic hydroperoxides, and organic peroxides, are useful at levels of from 0.05 percent to 5.0 percent by weight, based on the weight of monomers. Free radical initiators known in the art of aqueous emulsion polymerization include water-soluble free radical initiators, such as hydrogen peroxide, tert-butyl peroxide, benzoyl peroxide, t-butyl peroxtoate; alkali metal (sodium, potassium or lithium) or ammonium persulfate; azo initiators such as azobisisobutyronitrile or 2,2'-azobis(2-amidinopropane) dihydrochloride; or mixtures thereof. Such initiators may also be combined with reducing agents to form a redox system. Useful reducing agents include sulfites such as alkali metal meta bisulfite, or hyposulfite, sodium thiosulfate, or isoascorbic acid, or sodium formaldehyde sulfoxylate. The free radical precursor and reducing agent together, referred to as a redox system herein, may be used at a level of from about 0.01% to 5%, based on the weight of monomers used. Examples of redox systems include: t-butyl hydroperoxide/sodium formaldehyde sulfoxylate/Fe(III); t-butyl hydroperoxide/isoascorbic acid /Fe(III); and ammonium persulfate/sodium bisulfite/sodium hydrosulfite/Fe(III). The polymerization temperature may be 10°C to 110°C, depending upon such things as free radical initiator decomposition constant and reaction vessel pressure capabilities.

Frequently, a low level of chain transfer agent such as a mercaptan (for example: n-octyl mercaptan, n-dodecyl mercaptan, butyl or methyl mercaptopropionate, mercaptopropionic acid at 0.05 to 6% by weight based on total weight of monomer) is employed to limit the formation of any significant gel fraction or to control molecular weight.

The invention may also be practiced using a solvent soluble or water soluble polymer. When this is desired, the polymer may be prepared directly in water if the monomer mix is water soluble or, as is most often the case, the polymerization solvent is a water miscible solvent such as isopropanol, butyl cellosolve, propylene glycol, etc. In this case, water may be included in the polymerization mixture or post added after the polymerization is complete. In some cases, the polymer is prepared in a conventional organic solvent such as xylene or toluene. When organic solvent is employed with or without water, it is convenient to use a soluble organic free radical initiator such as azo-bis-isobutyronitrile, t-butyl-peroctoate, or benzoyl peroxide and whatever heat is convenient to assure smooth copolymerization. Another route to preparation of a water soluble polymer for this invention is to prepare a vinyl dispersion polymer having enough acrylic or methacrylic acid or other polymerizable acid monomer (usually greater than 10%) so that the emulsion polymer can be solubilized by addition of ammonia or other base. Water soluble polymers of this type are advantageously used as blends with conventional dispersion polymers. Systems of this type form a completely cured matrix when exposed to a free radical flux.

In another embodiment of this invention, an aqueous dispersion contains copolymer particles made up of at least two mutually incompatible copolymers. These mutually incompatible copolymers may be present in the following morphological configurations, for example, core/shell, core/shell particles with shell phases incompletely encapsulating the core, core/shell particles with a multiplicity of cores, interpenetrating network particles, and the like. In all of these cases, the majority of the surface area of the particle will be occupied by at least one outer phase and the interior of the particle will be occupied by at least one inner phase. The mutual incompatibility of the two polymer compositions may be determined in various ways known in the art. The use of scanning electron microscopy using staining techniques to emphasize the difference between the appearance of the phases, for example, is such a technique.

The emulsion polymerization techniques used to prepare such aqueous dispersions of copolymer particles made up of at least two mutually incompatible copolymers are well known in the art, and may be employed using the monoethylenically unsaturated monomers described above. It is sometimes advantageous to introduce some crosslinking or gel structure by the sequential polymerization process in the core via low levels of a multi-ethylenically unsaturate crosslinking monomer such as, for example, allyl methacrylate and others already described above. The lightly crosslinked core does not adversely affect film formation and does in some cases result in better coatings, particularly when reactive moieties able to participate in crosslinking reactions are concentrated in the shell.

Herein, "autoxidizable" is used to describe molecules, polymers, and moieties attached to those molecules and polymers that are air-curing, that is oxidized upon exposure to oxygen, such as that present in ambient air. Autoxidizable substances contain readily abstractable hydrogen atoms which allow them to undergo rapid free radical chain reactions with molecular oxygen. In most cases, the radical flux is generated by an autoxidizable substance on exposure of that substance to oxygen of the air. When an autoxidizable substance is present in a coating composition, such exposure to air occurs readily during and after formation and drying of a coating on a substrate in the presence of ambient air.

The composition of the present invention includes an autoxidizable alkoxysilane in addition to polymer. The autoxidizable alkoxysilane is added to the polymer composition prior to applying the composition to the substrate surface. While not wishing to be bound by theory, it is believed that, during and after application of the aqueous binder composition to a substrate, the polymeric composition forms crosslinks through reaction at the autoxidizable moieties and through hydrolysis at the Si-O-C moieties, resulting in O-Si-O crosslinks.

The autoxidizable moieties of the autoxidizable alkoxysilane as well as those that may optionally be incorporated into the binder polymer are readily oxidizable and known to give peroxides or hydroperoxides on exposure to oxygen. Preferably, the autoxidizable component has oxidizibilities as defined by W. C. Lloyd ("Autoxidations" in Methods in Free-Radical Chemistry, E. S. Huyser (Editor), Vol. 4. Marcel Dekkor, New York, 1973) of greater than 1 x 10⁻³ (liter/mole-sec)^{0.5}.

Any autoxidizable alkoxysilane is useful in the present invention. Preferred autoxidizable alkoxysilanes in the present invention are any compound having the formula Si(R₁)ₐ(R₂)_{b}(OR₃)_{4-a-b}, where R₁ is an organic residue containing at least one autoxidizable group such as -CH=CHCH₂CH=CH-,-CH=CH-CH=CH-, vinylether, or dicyclopentenyl bound to the silicon via a carbon atom; R₂ is an organic residue bound to the silicon via a carbon atom; and R₃ is an organic residue. Subscript "a" is an integer from 1 to 3, "b" is an integer from 0 to 2, and "a+b" is an integer from 1 to 3.

Examples of suitable autoxidizable alkoxysilanes include:
a) the reaction products of an epoxysilane, such as 2-(3,4-epoxycyclohexyl)-ethyltrimethoxysilane, (3-glycidoxypropyl)methyl-diethoxysilane, or 3-glycidoxypropyltrimethoxysilane, with an unsaturated fatty acid such as oleic acid, linoleic acid, eicosadienoic acid, linolenic acid, eicosatrienoic acid, arachidonic acid, eicosapentaenoic acid, docosahexaenoic acid, eleostearic acid, licanic acid, ricinoleic acid, palmitoleic acid, or erucic acid, or mixtures of unsaturated fatty acids as is commonly found in commercial products;
b) the reaction product of an isocyanatoalkoxysilane such as 3-isocyanatopropyl-triethoxysilane with an alcohol, amine, amide, or mercaptan compound containing the dicyclopentenyl group, for example 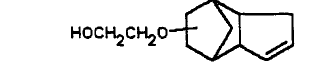 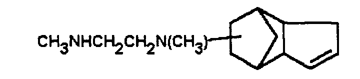 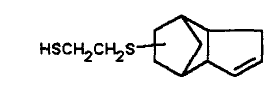 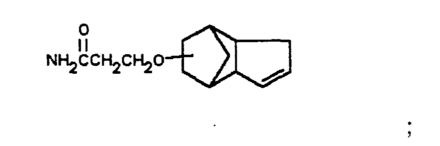
c) the reaction products of an epoxysilane, such as 2-(3,4-epoxycyclohexyl)-ethyltrimethoxysilane, (3-glycidoxypropyl)methyl-diethoxysilane, or 3-glycidoxypropyltrimethoxysilane, with an alcohol, amine, amide, acid, or mercaptan containing the dicyclopentenyl group;
d) the reaction products of a haloalkylalkoxysilane, such as 3-chloropropylmethyldimethoxysilane or 3-bromopropyltrimethoxysilane with an alcohol, amine, amide, acid, or mercaptan containing the dicyclopentenyl group;
e) the reaction products of a haloalkylalkoxysilane, such as 3-chloropropylmethyldimethoxysilane or 3-bromopropyltrimethoxysilane with an unsaturated fatty acid such as oleic acid, linoleic acid, eicosadienoic acid, linolenic acid, eicosatrienoic acid, arachidonic acid, eicosapentaenoic acid, docosahexaenoic acid, eleostearic acid, licanic acid, ricinoleic acid, palmitoleic acid, or erucic acid, or mixtures of unsaturated fatty acids as is commonly found in commercial products; and
f) the reaction products of an aminosilane such as 3-aminopropylmethyldiethoxysilane, 3-aminopropyl-triethoxysilane, N-(2-aminoethyl)-3-aminopropyltrimethoxysilane or 3-aminopropyltrimethoxysilane with an unsaturated fatty acid such as oleic acid, linoleic acid, eicosadienoic acid, linolenic acid, eicosatrienoic acid, arachidonic acid, eicosapentaenoic acid, docosahexaenoic acid, eleostearic acid, licanic acid, ricinoleic acid, palmitoleic acid, or erucic acid, or mixtures of unsaturated fatty acids as is commonly found in commercial products.

The level of autoxidizable alkoxysilane may range from 0.01 to 25% by weight, based on dry binder polymer solids. Preferred is a level of autoxidizable alkoxysilane from 0.1 to 10%, more preferred is 0.5 to 5%, most preferred is 1.0 to 5%, all by weight, based on dry binder polymer solids.

The coating composition may contain typical coating additives such as binders, fillers, defoamers, cross-linkers, catalysts, surfactants, stabilizers, anti-flocculants, tackifiers, coalescents, colorants, waxes, and pigments.

To accelerate the cure, the coating composition may also contain "driers", such as the organic or inorganic salts of Pb, Co, Mn, Zn, Ca, Zr, Ce, or Fe, and mixtures thereof. Simple salts such as the halides, nitrates, and sulfates may be used, but in many cases an organic anion such as the acetate, napthenate, or the acetoacetonate is used for solubility or compatibility reasons. These driers, which contain metal cations, are thought to function as catalysts by abstracting labile hydrogen radicals from activated carbon atoms, such as those adjacent to double bonds (e.g., allylic hydrogen atoms). Typical use levels of driers range from 0.01% to 1% by weight, based on weight of dry polymer solids.

Finally, if a cobalt drier is used and true one pack stability is desired, it may be useful to include a volatile stabilizer such as a ketone oxime or hindered aldehyde oxime. Specific examples are methyl ethyl ketone oxime, methyl butyl ketone oxime, 5-methyl-3-heptanone oxime and cyclohexanone oxime. Methyl ethyl ketone oxime is particularly useful. The exact function of the oxime in this system is unclear but it is believed to stabilize the cobalt by complex formation. After evaporation of the water or solvent, the volatile oxime is driven off and the drier activity of the cobalt is restored. The oxime stabilizer is typically used at 0.05 to 1% by weight of dry polymer.

When the coating composition is based on an aqueous emulsion polymer, it may contain polyamine functional polymers, as is taught in US-A-5,527,853, or the aqueous emulsion polymer may itself be amine-functional, in order to achieve rapid setting character. Used herein, these rapid setting coating compositions are called "fast-drying" coating compositions which, in turn, include "fast-drying binder compositions". In this case, the coating composition must be formulated at sufficiently high pH using a volatile base to maintain paint stability. However, the presence of amines and ammonia retards the cure of the autoxidizable alkoxysilane, and should be minimized to effect maximum cure rate. It is thought that the presence of amines and ammonia interfers with the cure by complexing with and deactivating the metal catalysts. If desired, this can be partially overcome by including organic complexing agents, such as 1,10-phenanthroline, in the formulation.

Polyamine functional polymers may be completely soluble, partially soluble, or insoluble in water. When these polymers are partially soluble or insoluble in water, they must be dispersible in aqueous systems containing the binder polymer. Polyamine functional polymers may be produced by polymerization in water. Such aqueous polymerization may be solution, emulsion, suspension, or dispersion polymerization, or any other aqueous polymerization capable of producing the polyamine functional polymers. Further, these aqueous polymerization systems may contain water miscible cosolvents. The aqueous reaction product of the aqueous polymerization used to produce a polyamine functional polymer may, without further treatment or isolation, be combined with at least one binder polymer. Usually the binder polymer itself will be in aqueous form. However, if it is desirable to isolate the polyamine functional polymer by removal of water and any cosolvent that may be present, this may be done provided that the polyamine functional polymer so isolated is redispersible in aqueous media prior to, during, or after combination with the binder polymer.

Polyamine functional polymers may also be prepared by solution polymerization in solvents other than water. Such solvent may or may not be miscible with water. The reaction product of the non-aqueous solution polymerization to produce polyamine functional polymer may, without further treatment or isolation, be combined with at least one binder polymer, provided that the solvent system for the solution polymerization is water miscible. Alternatively, the polyamine functional polymer may be isolated prior to combination with the binder polymer. Such isolation (i.e., removal of solvent) must be carried out if the solvent system is not miscible with water. When isolation of the solution polymer is necessary or desirable, it is a necessary condition that the polyamine function polymer so isolated be redispersible in aqueous media prior to, or during combination with the binder polymer. Typically, the binder polymer will be in aqueous form during combination with the polyamine functional polymer. Alternatively, the binder polymer could be isolated and then redispersed in the aqueous system used to combine the polyamine functional polymer with the binder polymer. A further alternative is to isolate both the polyamine functional polymer and the binder polymer, combine the two, and then disperse them in water.

The polymerizations to form polyamine functional polymers by any of the methods just described may be carried out under neutral, alkaline, or acidic conditions depending upon the particular polymer sought, as generally known in the art, for example as taught in US-A-4,119,600 and US-A-6,013,721. It is preferred to carry out the polymerization in an aqueous medium containing a small amount of an acid, either organic or inorganic, such as acetic acid or hydrochloric acid. The polyamine functional polymers include copolymers with up to 100% by weight of polymerized units derived from one or more monoethylenically unsaturated monomers having amine functional groups or functional groups that may be converted to amine functional groups through further reaction. Non-limiting examples of functional monomers that provide amino functionality to polyamine functional polymer include dimethylaminoethyl (meth)acrylate, dimethylaminopropyl (meth)acrylate, dimethylaminopropyl (meth)acrylamide, 2-(3-oxazolidinyl)ethyl (meth)acrylate, t-butylaminoethyl (meth)acrylate, 2-aminoethyl (meth)acrylate, N-(meth)acryloxypiperidine, 4-vinylbenzyldimethylamine, and 4-vinyl pyridine. Useful functional groups for providing additional water solubility to the polyamine functional polymer include, but are not limited to, amide, carboxylic acid, hydroxyl, and ether. Non-limiting examples of monomers containing these functional groups include (meth)acrylamide, 2-hydroxyethyl (meth)acrylate, alkyl (ethyleneoxy)ₙ (meth)acrylates where n=1-20, and vinyl ethers.

Small amounts of relatively insoluble comonomers may also be used to obtain water-soluble polyamine functional polymers. The insoluble polymers may contain larger amounts of these comonomers. Such hydrophobic monomers include, for example, C₁-C₁₈ alkyl (meth)acrylates, C₁-C₁₈ arylalkyl (meth)acrylates, aryl (meth)acrylates, styrene, vinyltoluene, vinyl acetate, vinyl chloride, vinylidene chloride, substituted styrenes, butadiene, substituted butadienes, ethylene, and the nitriles and amides of acrylic or of methacrylic acid.

Polyamine functional polymers are preferably prepared in a reactor containing deionized water under nitrogen atmosphere at an elevated temperature. The polymerization temperature may be 10°C to 110°C, preferably 40°C to 95°C, and more preferably 50°C to 80°C, depending upon such things as free radical initiator decomposition constant and reaction vessel pressure capabilities. The monomer or monomers may be fed to the reactor continuously, or as a single batch, or in a series of batches, or in some combination thereof. Typically, an amine functional (meth)acrylate monomer dissolved in water may be added continuously to the reactor during an extended period in the range of 15 minutes to several hours. Simultaneously, initiator feeds may be added in continuous fashion designed to assure that initiation of the monomer occurs throughout the time of its addition. Initiator feeds may also be added subsequent to completion of the monomer feed to assure completion of polymerization.

Initiation of the aqueous polymerizations to produce the polyamine functional polymer may be carried out using the initiators and initiator systems already described hereinabove for preparation of the binder polymer.

Surfactants are commonly present in these polymerization systems to stabilize any polymer particles that may form in the aqueous media and, where necessary or desirable, to stabilize aqueous emulsions of monomer useful as the monomer feed stream. The surfactants already described hereinabove for preparation of the binder polymer are also appropriate for preparation of the polyamine functional polymer.

Sequestering agents such as the tetrasodium salt of ethylenediamine tetraacetic acid (typically 0.1 % to 2.0 % by total weight reaction mixture) may also be present.

Useful fast-drying binder compositions include several types of fast drying waterborne binder compositions. Some of these fast-drying binder compositions are described in the next paragraphs. Although the present invention is applicable to all of the fast drying binder compositions described herein, it is not limited to them, but rather is general for any fast drying binder composition and the fast drying multi-component waterborne coatings incorporating them.

Used herein, the term "polyamine functional polymer" refers to polymers bearing amine functional moieties either pendant to the polymer backbone or as an integral part of the backbone, or a combination of both pendant and backbone amine groups. As noted herein below, these polyamine functional polymers can be prepared from amine monomers, imine monomers, and monomers bearing functionality that can be converted to amine functionality.

Certain of the fast-drying compositions described hereinafter have Tg (glass transition temperature) ranges for the binder polymer that are somewhat narrower than the range -10°C to 70°C disclosed for the binder polymers of the present invention. Such narrowed Tg ranges should in no way be construed as limiting the present invention. Any of these fast drying coating compositions may be prepared such that they contain binder polymer having Tg as low as 10°C and as high as 70°C.

EP-B-0,409,459 discloses a fast drying aqueous coating composition including an anionically stabilized emulsion polymer having Tg no lower than 0°C, a polyamine functional polymer, and a volatile base in an amount such that the composition has a pH where substantially all of the polyamine functional polymer is in a non-ionic state, and wherein more than 50% by weight of the polyamine functional polymer will be soluble at pH values of 5 to 7 on evaporation of the volatile base. In the non-ionic state (i.e., deprotonated), polyamine functional polymer interaction with the anionically stabilized emulsion and any other anionic ingredients which may be present in the composition is eliminated. The volatile base must be volatile enough to be released under air drying conditions. During film formation, the volatile base evaporates with the result that the amine moieties of the polyamine functional polymer become protonated to form ammonium moieties which, in turn, interact with the anionic ingredients to destabilize the coating composition and thereby accelerate drying.

WO 96/22,338 discloses a fast drying aqueous coating composition including from 95 to 99 weight percent of an anionically stabilized aqueous emulsion of a copolymer having a Tg of from -10°C to 50°C, the copolymer containing two or more ethylenically unsaturated monomers, wherein from 0 to 5 weight percent of the monomers are α,β-ethylenically unsaturated aliphatic carboxylic acid monomers; from 0.2 to 5 weight percent of a polyimine having a molecular weight of from 250 to 20,000; and from 0.2 to 5 weight percent of a volatile base, wherein the composition has a pH from 8 to 11, and wherein a cast film of the composition loses the volatile base by evaporation to accelerate drying. The term "polyimine", used in the context of WO 96/22,338, indicates that the polymer was prepared using imine monomers (e.g., ethyleneimine). The resultant polymer contains no imine functionality. Instead, the polymer contains amine functionality as part of the polymer backbone. It is this polyamine functional polymer that is deprotonated in the presence of volatile base. Upon formation of a film from the aqueous coating composition, the volatile base is released, allowing the amine moieties in the polymer backbone to protonate.

US-A-5,922,398 discloses aqueous coating compositions containing a latex having pendant amine-functional groups, wherein such latex has a Tg equal to or greater than 0°C and is capable of film formation at application temperatures, and an amount of base sufficient to raise the pH of the composition to a point where essentially all of the amine functional groups are in a non-ionic state. The amine-functionalized latexes have a number average molecular weights in the range of 1,000 to 1,000,000 and particle sizes that vary between 20 and 1000 nanometers. These latexes may be in the form of single, or multi-staged particles. The multi-staged particles include at least two mutually incompatible copolymers having any of a wide variety of morphologies, including core/shell, interpenetrating network, and multiple core. The latex polymer may also contain acid-functional moieties. When acid-function moieties are present, the weight ratio of amine-functional moieties to acid-functional moieties is generally at least 3 to 1. Both amine-functional moieties and acid-functional moieties may be incorporated into the same latex particle or into separate latex particles. Amine functional monomers polymerized to prepare amine-functional latex particles are used at a level of at least 2 percent by weight, based on total monomers. Acid functional monomers polymerized to prepare acid-functional latex particles are used at a level that is usually less than 10 percent by weight, based on total monomers. Latex particles are stabilized by surfactants, including anionic and non-ionic emulsifiers. The coating compositions of US 5,922,398 use volatile base (e.g., ammonia) to stabilize the amine-functional moieties of the latex particles against interaction with surfactants during storage and application of films. Once applied, the films lose volatile base by evaporation, the amine-functional particles protonate to become ammoniumfunctional particles which, in turn, interact with surfactant, causing destabilization of the latex particles and acceleration of drying.

Used herein, "weight average molecular weight", "Mw", and "number average molecular weight", "Mn", are determined by gel permeation chromatography (GPC) which is described on page 4, Chapter I of The Characterization of Polymers published by Rohm and Haas Company, Philadelphia, Pa. in 1976. For polymers that are soluble in either Tetrahydrofuran or dimethylformamide, polymethylmethacrylate is used as the molecular weight standard. For water soluble polymers, polymethacrylic acid is used as the standard. Prior to the GPC analysis of water soluble polymers, they are treated with potassium hydroxide in ethanol at elevated temperatures, which are sufficient to fully hydrolyze the water soluble polymers. The GPC weight average molecular weight can be estimated by calculating a theory weight average molecular weight. In systems containing chain transfer agents, the theory weight average molecular weight is simply the total weight of polymerizable monomer in grams divided by the total molar amount of chain transfer agent used during the polymerization. Estimating the molecular weight of an polymer binder system that does not contain a chain transfer agent is more complex. A cruder estimate can be obtained by taking the total weight of polymerizable monomer in grams and dividing that quantity by the product of the molar amount of an initiator multiplied by an efficiency factor (in our persulfate initiated systems, we have used a factor of approximately 0.5). Further information on theoretical molecular weight calculations can be found in Principles of Polymerization 2nd edition, by George Odian published by John Wiley and Sons, N.Y., N.Y. in 1981 and in Emulsion Polymerization edited by Irja Pirma published by Academic Press, N.Y., N.Y. in 1982.

US-A-5,824,734 discloses an improved fast drying coating composition particularly adapted for use as a traffic paint. This basic waterborne coating for traffic paint includes an aqueous emulsion containing an acrylic film forming polymer, a stabilizing system for the emulsion which is pH sensitive, and mineral pigment. The acrylic film forming polymer is a hydrophobic acrylate containing polymer. The hydrophobic monomers polymerized to produce the hydrophobic acrylate containing polymer include alkyl esters of acrylic or methacrylic acid having an alkyl ester portion containing between 1 to 12 carbon atoms. The hydrophobic acrylate containing polymer further incorporates from about 0.1 to 5% by weight of a secondary or tertiary amino acrylate and 0.1 to 5% by weight of crosslinkable monomers, such as N-alkylol acrylamides and N-alkylol methacrylamides, both weight percents based on total weight of polymer. The hydrophobic acrylate containing polymer should further contain less than 5 weight percent of hydrophilic monomers, based on total polymer. The aqueous dispersion is typically stabilized by a combination of anionic and non-ionic surfactants, and is pH sensitive. The pH is maintained above 7, preferably by addition of a volatile base like ammonia, until application of the coating onto a surface. Loss of base then effects collapse of the emulsion and the water is exuded from the amide- or amine-functional acrylate containing film forming hydrophobic polymer.

WO 98/52,698 discloses a coating material including a substrate having a surface and a coating thereupon, wherein the coating is prepared by: a) contacting the surface of the substrate with a stable aqueous dispersion that contains a polymer having pendant strong cationic groups, and pendant weak acid groups; or b) contacting the surface of the substrate with a stable aqueous dispersion that contains a first polymer having pendant strong cationic groups, and a stable aqueous dispersion of a second polymer having pendant weak acid groups, the contact of the polymers with the surface being made in any order, or concurrently. When the stable aqueous dispersion contains a polymer having pendant strong cationic groups and pendant weak acid groups (i.e., coating "a" of WO 98/52,698), it is a necessary condition that the surface of the substrate is, or is treated to be, sufficiently basic that the stable aqueous dispersion sets in less time than the time required for a latex that only contains pendant strong cation groups, or pendant weak acid groups, to set. The cationic groups are, for example, quaternary ammonium moieties, while the weak acid groups are, for example, carboxylic acid moieties. When coating "a" contacts the basic surface of the substrate, the base removes the proton from the weak acid, producing an anionic species that interacts with the cationic moiety to form crosslinks, destabilize the dispersion, and accelerate drying of the film. Cationic surfactants present in the aqueous dispersion are also rendered inactive by interaction with the anions generated from the weak acid groups. When coating "b" of WO 98/52,698 is applied to a substrate, there is no requirement that the substrate be basic because one dispersion is cationically stabilized and the other is anionically stabilized such that, upon mixing, the oppositely charged surfactants interact to inactivate one another. Further, because the weak acid functional latex particles are anionically stabilized in coating "b", it is possible to adjust the pH of the aqueous dispersion such that the weak acid moieties are deprotonated and available to interact with cationic species upon film formation. The various routes to destabilization are possible contributors to accelerated drying of films.

The coating composition of this invention may be applied to the substrate surface by methods well known in the art such as air-assisted spray, airless spray, plural component spray, brush, roller, squeegee, and the like.

After the crosslinkable composition is applied to a substrate, the composition dries or is caused to dry. Drying to yield useful properties may take place at a convenient rate at ambient temperatures such as, for example, from 5 °C. to 35 °C. A typical drying condition is 23°C at 50% relative humidity.

While the coating compositions of the present invention are particularly well suited to traffic marking compositions, they are also useful in other applications, such as for coatings for wood, masonry, metal, concrete, glass, plastics, leather, and hardboard. They may also be formulated into caulks, sealants, adhesives, or mastics.

All ranges used herein are inclusive and combinable.
**Glossary**.
Used herein, the following abbreviations and terms have these meanings:
k = 1,000 (see wear testing, Example 7)
Cps centipoise
rpm revolutions per minute
nm nanometer
PAMOLYN™ 200 (a mixture of fatty acids, primarily linoleic acid)
RHOPLEX™ E-2706 is an emulsion polymer product available from Rohm and Haas Company, Philadelphia, Pennsylvania.
TAMOL™ 901 Dispersant, an ammonium salt of polyelectrolyte supplied by Rohm and Haas Company, Philadelphia, Pennsylvania @ 30 percent by weight.
SURFYNOL™ CT-136 Surfactant, an acetylenic surfactant supplied by Air Products and Chemicals, Inc., Allentown, Pennsylvania.
DREW™ L-493 Defoamer supplied by Drew Chemical Company, Boonton, New Jersey.
TIPURE™ R-900 Titanium dioxide supplied by E.I. duPont de Nemours & Company, Wilmington, Delaware.
OMYACARB™ 5, Ground natural calcium carbonate, evaluated under ASTM D 1199, Type GC, Grade II having a number average particle size of 5.5 microns with maximum oil absorption No. of 10, supplied by Omya, Inc., Proctor, Vermont.
TEXANOL™ Ester alcohol supplied by Eastman Chemicals, Kingsport, Tennessee
NATRASOL™ 250HR is a hydroxyethylcellulose thickener available from Hercules Inc., Aqualon Division, Wilmington, Delaware.
TRITON™ X-405 is a surfactant available from Rohm and Haas Company, Philadelphia, Pennsylvania.
HYDROCEM™ is available from Calcium OMG, Cleveland, Ohio.
AQUACAT™ is a cobalt crosslinking aid available from Ultra Additives, Inc., Paterson, New Jersey.

### EXAMPLE 1

### Preparation of aqueous emulsion polymer having functional groups that are autoxidizable or reactive with compounds formed during the oxidation of the autoxidizable alkoxysilane (1,3-dicarbonyl groups).

To 3799 g of deionized (DI) water under a nitrogen atmosphere at 90°C was added 24 g ammonium persulfate dissolved in 226 g DI water, 33 g ammonium bicarbonate dissolved in 226 g DI water, and 724 g polymer seed latex (solids content 42% average particle diameter of 60 nm), followed by 136 g of DI water to form a reaction mixture to which the following monomer mixture was then added over 3 hours at 81°C along with a solution of 9.4 g ammonium persulfate dissolved in 471 g DI water, followed by 226 g DI water.

| **Components of Monomer Mixture** | **Weight of Component in grams (g)** |
|---|---|
| DI water | 2872 |
| Sodium lauryl sulfate (28% active) | 40.7 |
| butyl acrylate | 3886 |
| methylmethacrylate | 4731 |
| acetoacetoxyethyl methacrylate | 760 |
| n-dodecylmercaptan | 118 |

At the end of the polymerization, 0.04 g FeSO4 in 39 g DI water, 2 g versene in 37 g DI water, 5.3 g t-butylhydroperoxide in 90 g DI water and 2.6 g isoascorbic acid in 181 g DI water were added at 60°C to the reaction product. Ammonium hydroxide was added to give a final pH =8.7. The resulting latex polymer had a solids content of 52.2 % and an average particle diameter of 197 nm.

### EXAMPLE 2

### Preparation of aqueous emulsion polymer having substantially no functional groups that are autoxidizable or reactive with compounds formed during the oxidation of the autoxidizable alkoxysilane.

To 3583 g of deionized (DI) water under a nitrogen atmosphere at 90°C were added 67.9 g sodium lauryl sulfate (28%), 547 g of monomer mix, 33 g sodium carbonate dissolved in 196 g DI water, and 24 g sodium persulfate dissolved in 98 g DI water to form a reaction mixture to which the following monomer mixture was then added over 3 hours at 81°C along with a solution of 9.7 g sodium persulfate dissolved in 440 g DI water.

| **Components of Monomer Mixture** | **Weight of Component in grams (g)** |
|---|---|
| DI water | 3959 |
| Sodium lauryl sulfate (28% active) | 67.9 |
| butyl acrylate | 4332 |
| methyl methacrylate | 5045 |
| methacrylic acid | 124 |

At the end of the polymerization, 0.06 g FeSO4 in 40 g DI water, 7.8g t-butylhydroperoxide in 88 g DI water and 2.9 g sodium sulfoxylate formaldehyde in 176 g DI water were added at 60°C to the reaction product. Ammonium hydroxide was added to give a final pH =10.3, followed by addition of 26 g of a 37% formaldehyde solution. The resulting latex polymer had a solids content of 51.7 % and an average particle diameter of 172 nm.

### EXAMPLE 3

### Preparation of an autoxidizable alkoxysilane with drying oil functionality.

A 100ml 3-neck round bottom flask was outfitted with a N₂ inlet tube, reflux condenser, and magnetic stirrer. The flask was charged with 20.05g of PAMOLYN™ 200 (a mixture of fatty acids, primarily linoleic acid) and 16.85g of 3-glycidoxy-propyltrimethoxysilane. The mixture was stired under a N₂ blanket and heated to 100°C for 3hrs. 10.0g of hexane was added and the mixture was refluxed for 1.5hr. The reflux condenser was replaced with a distillation head, and the hexane was distilled off. C¹³ NMR analysis of the reaction product showed complete addition of the fatty acid to the epoxy to make the ester alcohol. The product is 100% active.

### EXAMPLE 4

### Preparation of an autoxidizable alkoxysilane with dicyclopentenyl functionality.

Into a 25ml glass vial was placed 10.0g of isocyanatopropyltriethoxysilane, 7.85g of ethylene glycol dicyclopentenyl ether, and 5.00g toluene. The mixture was allowed to stand at room temperature for 5 days. The FTIR spectrum of the reaction product showed near complete addition of the alcohol to the isocyanate to make the urethane. The product is 78.1% active.

### POLYAMINE P1

Polyamine P1 is poly-co-(dimethylaminoethyl methacrylate / methacrylic acid / methyl methacrylate / butyl methacrylate / butyl acrylate / acrylic acid) having a GPC number average molecular weight, Mn, of approximately 14,500. It was prepared by conventional emulsion polymerization techniques as a 27.8% solids solution, based on total weight of solution, in water at pH = 9.6 and a viscosity of 2200 cps (centipoise). The calculated theoretical amount of amine groups in Polyamine P1 is 5.9 meq/g (milliequivalents / gram) solid polymer. The following amounts of each monomer polymerized to prepare Polyamine P1 are given as weight percents, based on total monomers.

| Monomer Name | Weight Percent, based on Total Monomers |
|---|---|
| dimethylaminoethyl methacrylate | 90.5 |
| methacrylic acid | 7.0 |
| methyl methacrylate | 1.0 |
| butyl methacrylate | 0.5 |
| butyl acrylate | 0.5 |
| acrylic acid | 0.5 |

Viscosity was determined as a Brookfield viscosity (spindle 2 at 60 rpm using a Brookfield Model LVTD Viscometer).

### POLYAMINE P2

### Preparation of a polyamine for use as a rapid-set additive. Polyamine P2 is a polyfunctional amine polymer.

To a 2-liter reactor containing 600 g of deionized (DI) water under a nitrogen atmosphere at 60°C, 2.8 g of an aqueous solution of ferrous sulfate heptahydrate (0.15% by weight of solution) and 0.8 g of an aqueous solution of the tetrasodium salt of ethylenediamine tetraacetic acid (1 % by weight of solution) diluted with 10 g DI water were added with stirring. A feed composed of 200 g 2-(3-oxazolidinyl)ethyl methacrylate (OXEMA) and 100 g DI water was added over a 2 hour period. Simultaneously, feeds composed of 2 g *t*-butylhydroperoxide (70 weight % active ingredient) dissolved in 23 g DI water and 2 g sodium sulfoxylate formaldehyde dihydrate dissolved in 23 g DI water were added over a 2 hour peroid. After completion of the feeds, the reaction was held at 60°C for 30 minutes then 0.16 g of *t*-butylhydroperoxide (70 weight % active ingredient) dissolved in 10 g DI water was added. Fifteen minutes later, 0.1 g of *t*-butylhydroperoxide (70 weight % active ingredient) dissolved in 10 g DI water and 0.06 g sodium sulfoxylate formaldehyde dihydrate dissolved in 10 g DI water were added. Fifteen minutes later, the reaction mixture was cooled to room temperature. The final reaction mixture had a pH of 8.2, solids content of 17.6 weight %, and a Brookfield viscosity (spindle 2 at 60 rpm) of 30 cps.

### EXAMPLE 5

### Preparation of traffic-marking Compositions.

Traffic-marking compositions (TMC 1- 12) and Comparative Samples A-D were prepared according to the following formulations. The ingredients were added in the order given under low shear laboratory mixing. After the addition of the OMYACARB®-5, stirring was continued for 15 minutes before the addition of the remaining ingredients. The ingredients used in the preparation of intermediate base paints P1-P4 are presented in Table 6.1. The intermediate base paints were then used in the preparation of traffic marking compositions TMC-1 to TMC-12 and Comparative Samples A-D , the ingredients, presented in Table 6.2, were added in the order given under low shear laboratory mixing.

**TABLE 6.1**

| **Ingredients for intermediate base paint compositions P1-P4 for use in traffic marking compositions.** | | | | |
|---|---|---|---|---|
| Base Paint | P1 | P2 | P3 | P4 |
| Emulsion polymer (solids as supplied) | 460.1g RHOPLEX™ E-2706 | 333.1g Example 1 | 44.2g Example 1 | 6054.0g Example 2 |
| 14% NH₃ | | 15.8 | | |
| Polyamine P1 | | 7.82 | | |
| Polyamine P2 | | | | 222.0 |
| TAMOL® 901 | 7.2 | 5.45 | 0.72 | 97.9 |
| SURFYNOL™ CT-136 | 2.8 | 2.12 | 0.28 | 38.1 |
| DREW™ L-493 | 2.0 | 1.52 | 0.20 | 27.1 |
| TIPURE® R-900 | 100.0 | 75.58 | 10.0 | 1361.0 |
| OMYACARB®-5 | 760.6 | 574.9 | 76.1 | 10348.0 |
| MeOH | 30.0 | 22.68 | 3.01 | 408.0 |
| TEXANOL™ | 23.0 | 17.38 | 2.31 | 319.0 |
| Water | 11.6 | 8.77 | 1.17 | 158.0 |
| NATROSOL™ 250HR | 7.0 | | | |
| DREW™ L-493 | 3.5 | 2.65 | 0.35 | 47.7 |
| Water | | | | 100.0 |
| Note: All quantities are in grams unless otherwise specified. | | | | |

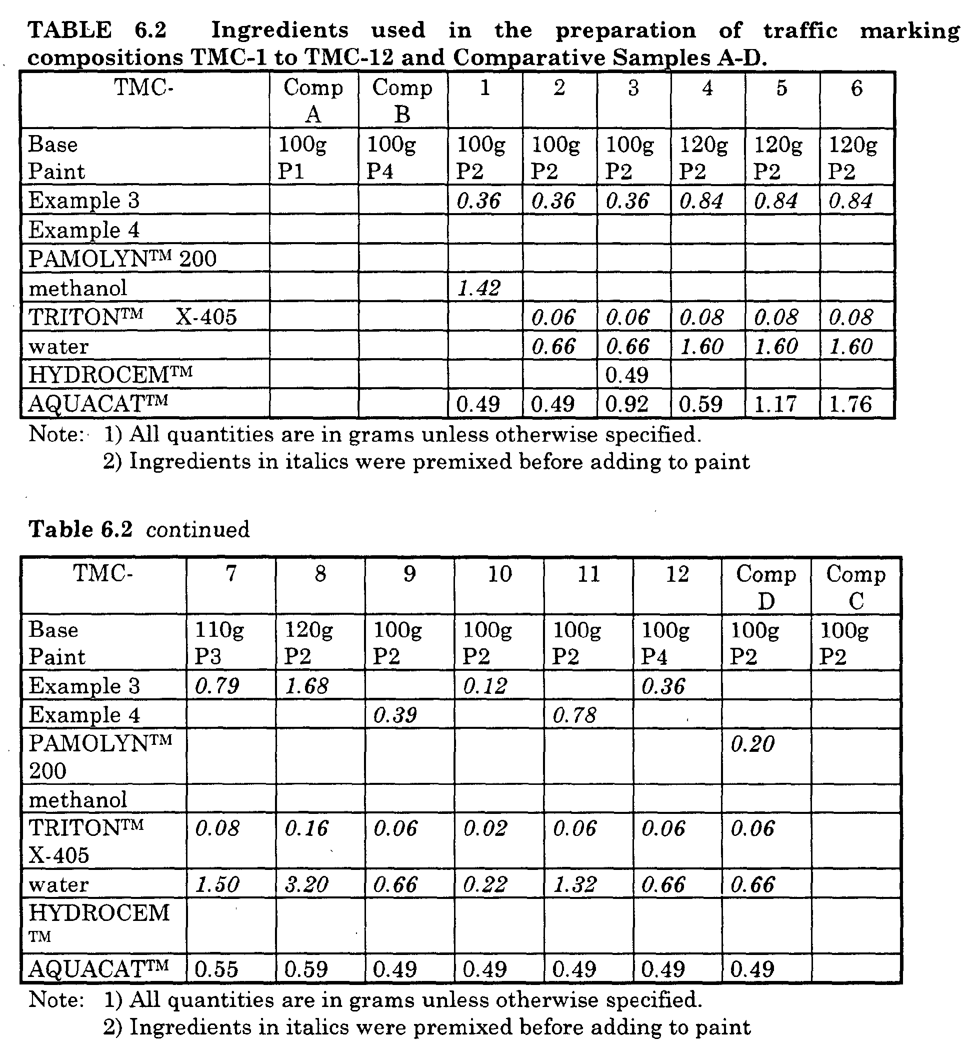

### EXAMPLE 7

### Testing of wear resistance of applied traffic marking composition.

Test panels were prepared by spraying coatings of traffic marking compositions or comparative samples onto very smooth concrete with no exposed aggregate (product of Patio Concrete Co., panels preconditioned with 200k wet cycles in the Trafficometer wear tester before coating) using conventional air spray to a wet film thickness of 0.38 mm. (15 mils). The coatings were dried at room temperature for the time indicated prior to wear testing.

The wear test measures the durability or wear resistance of a coating under accelerated conditions by contacting the surface repeatedly with rolling wear wheels under pressure through a curved path. The panel is cycled between wet and dry testing; the number of cumulative rotations of the Trafficometer wheel dolly in listed for each panel rating in 1000's of rotations. The Trafficometer device is described in EP-A-3,086,747. Wear data is presented in Tables 7.1 and 7.2 and is given as the surface area of paint in cm² removed from the panel. The panel is cycled between wet and dry testing; the number of cumulative rotations of the Trafficometer wheel dolly in listed for each panel rating in 1000's(k) of rotations. A blank indicates that no wear through of the coating was observed.

**TABLE 7.1**

| **Wear Testing Results** | | | | |
|---|---|---|---|---|
| | Comp. A | TMC-1 | TMC-2 | TMC-3 |
| Autoxidizable alkoxysilane | none | 2.2% Example 3 | - 2.2% Example 3 | 2.2% Example 3 |
| dry time | 16hr | 5 days | 16hrs | 16hrs |
| wet 0.4k | 1.3 cm² | | | 4.5 |
| 1.0k | 22.6 | | 0.84 | 11.0 |
| 2.5k | 22.6 | | 3.9 | 22.6 |
| 5.2k | 22.6 | | 3.9 | 22.6 |
| 7.9k | 22.6 | | 3.9 | 22.6 |
| 14k | 22.6 | | 18.1 | 22.6 |
| 18k | 22.6 | 0.26 | 18.1 | 22.6 |
| 27k | 22.6 | 4.5 | 18.1 | 22.6 |
| 37k | 22.6 | 7.1 | 18.1 | 22.6 |
| 62k | 22.6 | 11.6 | 18.1 | 22.6 |
| 172k | 22.6 | 18.1 | 18.1 | 22.6 |
| dry 217k | 22.6 | 18.1 | 18.1 | 22.6 |
| wet 341k | 22.6 | 20.6 | 18.1 | 22.6 |
| | All areas removed are in cm² | | | |

A comparison of TMC-2 to Comparative A shows the improved durability of a traffic marking composition made from an aqueous emulsion polymer having functional groups which are autoxidizable or reactive with compounds formed during the oxidation of the autoxidizable alkoxysilane and an autoxidizable alkoxysilane over that of a conventional traffic marking composition. A comparison of TMC-1 to TMC-2 shows the further improvement in durability obtained by allowing the traffic marking composition to cure for a longer time before testing.

**Table 7.2**

| **Wear Testing Results** | | | | | | |
|---|---|---|---|---|---|---|
| | Comp. A | TMC-4 | TMC-5 | TMC-6 | TMC-7 | TMC-8 |
| Autoxidizable alkoxysilane | none | 4.3% Example 3 | 4.3% Example 3 | 4.3% Example 3 | 4.3% Example 3 | 8.6% Example 3 |
| dry time | 16hr | 16hr | 16hrs | 16hr | 16hr | 16hrs |
| wet 0.4k | 0.26 cm² | | | 0.26 | | 0.26 |
| 1.0k | 0.65 | 0.26 | 0.26 | 4.5 | | 4.5 |
| 2.3k | 2.6 | 0.65 | 1.3 | 11.6 | | 11.6 |
| 4.4k | 11.6 | 1.3 | 1.9 | 11.6 | | 22.6 |
| 6.9k | 11.6 | 2.6 | 3.2 | 11.6 | 1.3 | 22.6 |
| 12k | 11.6 | 1.1 | 3.2 | 11.6 | 3.2 | 22.6 |
| 22k | 11.6 | 1.6 | 3.2 | 11.6 | 3.2 | 22.6 |
| dry 39k | 11.6 | 11.6 | 4.5 | 11.6 | 5.8 | 22.6 |
| wet 42k | 11.6 | 11.6 | 4.5 | 11.6 | 5.8 | 22.6 |
| 202k | 11.6 | 22.6 | 5.8 | 22.6 | 12.3 | 22.6 |
| dry 354k | 11.6 | 22.6 | 7.1 | 22.6 | 12.3 | 22.6 |
| wet 377k | 11.6 | 22.6 | 7.1 | 22.6 | 16.1 | 22.6 |
| | All areas removed are in cm² | | | | | |

A comparison of TMC-4, TMC-5, and TMC-7 to Comparative A shows the improved durability of a traffic marking composition made from an aqueous emulsion polymer having functional groups which are autoxidizable or reactive with compounds formed during the oxidation of the autoxidizable alkoxysilane and an autoxidizable alkoxysilane over that of a conventional traffic marking composition. A comparison of TMC-4, TMC-5, and TMC-6 shows the effect of increased drier levels on durability. A comparison of TMC-4, TMC-5, and TMC-6 shows the effect of increased drier levels on durability. A comparison of TMC-4 and TMC-8 shows the effect of increased autoxidizable levels on durability. A comparison of TMC-4 and TMC-7 shows the effect of polyamine on durability.

**Table 7.3**

| **Wear Testing Results** | | | | | | | | | | |
|---|---|---|---|---|---|---|---|---|---|---|
| | Comp A^{a} | Comp C | Comp C | TMC -2 | TMC -2 | TMC -9 | TMC -9 | TMC -10 | TMC -10 | TMC -11 |
| Autoxidizable alkoxysilane | none | none | none | 2.2% Ex. 3^{b} | 2.2% Ex. 3 | 2.2% Ex. 4 | 2.2% Ex. 4 | 0.7% Ex. 3 | 0.7% Ex. 3 | 4.4% Ex. 4 |
| dry time | 16hr | 16hr | 3days | 16hr | 3days | 16hr | 3days | 16hr | 3days | 16hrs |
| wet 1.1k | | 4.5 cm² | | | | | | 0.06 | | 0.19 |
| 2.2k | 0.19 | 5.2 | 0.06 | | | | | 0.06 | | 0.58 |
| 3.4k | 5.8 | 5.8 | 0.06 | | | | | 0.06 | | 0.65 |
| 5.1k | 8.4 | 11.6 | 0.06 | | | | | 0.06 | | 1.9 |
| 7.7k | 11.6 | 11.6 | 0.06 | | | | | 0.06 | | 1.9 |
| 13k | 22.6 | 11.6 | 0.06 | | | | | 0.06 | | 1.3 |
| 18k | 28.4 | 11.6 | 0.13 | | | | | 0.19 | | 1.9 |
| 25k | 28.4 | 11.6 | 0.13 | | | | | 0.26 | | 1.9 |
| 34k | 28.4 | 11.6 | 0.32 | 0.06 | | 0.26 | | 0.26 | | 2.6 |
| dry 37k | 28.4 | 11.6 | 2.6 | 0.06 | | 0.26 | | 0.58 | | 3.2 |
| 42k | 28.4 | 11.6 | 2.6 | 0.06 | | 0.26 | | 0.58 | | 3.2 |
| 47k | 28.4 | 11.6 | 3.9 | 0.06 | | 0.26 | 0.06 | 0.58 | | 3.2 |
| wet 167k | 34.2 | 11.6 | 5.8 | 0.13 | | 0.26 | 0.06 | 0.58 | 0.06 | 7.1 |
| dry 179k | 34.2 | 11.6 | 5.8 | 0.13 | | 0.26 | 0.06 | 0.58 | 0.06 | 7.1 |
| wet 193k | 45.2 | 16.8 | 5.8 | 0.13 | | 0.26 | 0.06 | 0.58 | 0.06 | 7.1 |
| dry 201k | 45.2 | 16.8 | 5.8 | 0.13 | 0.06 | 0.26 | 0.13 | 1.3 | 0.06 | 7.1 |
| wet 221k | 45.2 | 16.8 | 5.8 | 0.19 | 0.06 | 0.58 | 0.19 | 1.3 | 0.06 | 7.1 |
| | All areas removed are in cm² | | | | | | | | | |

| | | | | | | | | | | |
|---|---|---|---|---|---|---|---|---|---|---|
| a) Comp = Comparative Example | | | | | | | | | | |
| b) Ex.= Example | | | | | | | | | | |

Table 7.3 results indicate that Traffic marking compositions containing an autoxidizable alkoxysilane have enhanced wear resistance compared with compositions that do not contain an autoxidizable alkoxysilane.

**Table 7.4**

| **Wear Testing Results** | | | | | |
|---|---|---|---|---|---|
| | Comp. B | Comp. C | Comp. D | TMC-12 | TMC-2 |
| Autoxidizable alkoxysilane | none | none | none | 2.2% Example 3 | 2.2% Example 3 |
| dry time | 3days | 3days | 3days | 3days | 3days |
| wet 3.1k | | | | | |
| 7.3k | 0.06 cm² | 0.13 | 0.06 | | |
| 15k | 5.8 | 0.13 | 0.26 | | |
| 25k | 11.6 | 0.26 | 0.45 | | |
| 38k | 14.2 | 0.26 | 0.6 | | |
| 42k | 22.6 | 0.26 | 0.6 | | |
| dry 57k | 27.7 | 1.3 | 2.6 | | 0.58 |
| wet 164k | 34.2 | 2.6 | 3.2 | | 0.58 |
| dry 177k | 34.2 | 2.6 | 3.2 | | 0.58 |
| wet 196k | 34.2 | 3.2 | 3.2 | | 0.65 |
| dry 207k | 34.2 | 5.2 | 5.8 | | 1.3 |
| | All areas removed are in cm² | | | | |

The results set forth in Tables 7.1 through 7.4 show that compositions TMC-1 to TMC-12 of this invention exhibit superior wear resistance when compared with Comparatives A, B, C, and D.

## Claims

1. A coating composition comprising:
(a) at least one autoxidizable alkoxysilane; and
(b) at least one binder polymer.

2. The coating composition of claim 1,
wherein said binder polymer is an aqueous emulsion polymer.

3. The coating composition of claim 1,
wherein said coating composition comprises 0.01 to 25% by weight of said autoxidizable alkoxysilane, based on the dry weight of said binder polymer.

4. The coating composition of claim 1,
wherein said autoxidizable alkoxysilane has the formula Si(R₁)ₐ(R₂)_{b}(OR₃)_{4-a-b},
wherein
(a) R₁ is an organic residue containing at least one
-CH=CHCH₂CH=CH- or -CH=CH-CH=CH- group and is bound to the silicon via a carbon atom;
(b) R₂ is an organic residue bound to the Si via a C atom;
(c) R₃ is an organic residue;
(d) "a" is an integer from 1 to 3;
(e) "b" is an integer from 0 to 2; and
(f) the sum of "a" and "b" is an integer from 1 to 3.

5. The coating composition of claim 1,
wherein said autoxidizable alkoxysilane has the formula Si(R₁)ₐ(R₂)_{b}(OR₃)_{4-a-b},
wherein:
(a) R₁ is an organic residue containing at least one dicyclopentenyl group and is bound to the silicon via a carbon atom;
(b) R₂ is an organic residue bound to the silicon via a carbon atom;
(c) R₃ is an organic residue;
(d) "a" is an integer from 1 to 3;
(e) "b" is an integer from 0 to 2; and
(f) the sum of "a" and "b" is an integer from 1 to 3.

6. The coating composition of claim 1,
wherein said binder polymer contains at least one functional group that is autoxidizable or reactive with compounds formed during the oxidation of said autoxidizable alkoxysilane.

7. The coating composition of claim 6,
wherein said functional group is a 1,3-dicarbonyl group.

8. The coating composition of claim 7,
wherein said 1,3-dicarbonyl functionality is derived from the residue of acetoacetoxyethyl methacrylate.

9. A method for producing a coating on a substrate surface comprising:
(i) applying to said substrate surface a layer of a coating composition comprising:
(a) at least one autoxidizable alkoxysilane; and
(b) at least one binder polymer; and
(ii) drying said coating composition.

10. The method of claim 9,
wherein said binder polymer is an aqueous emulsion polymer.

11. The method of claim 9,
wherein said coating composition comprises 0.01 to 25% by weight of said autoxidizable alkoxysilane, based on the dry weight of said binder polymer.

12. The method of claim 9,
wherein said autoxidizable alkoxysilane has the formula Si(R₁)ₐ(R₂)_{b}(OR₃)_{4-a-b},
wherein
(a) R₁ is an organic residue containing at least one -CH=CHCH₂CH=CH- or -CH=CH-CH=CH- group and is bound to the silicon via a carbon atom;
(b) R₂ is an organic residue bound to the Si via a C atom;
(c) R₃ is an organic residue;
(d) "a" is an integer from 1 to 3;
(e) "b" is an integer from 0 to 2; and
(f) the sum of "a" and "b" is an integer from 1 to 3.

13. The method of claim 9,
wherein said autoxidizable alkoxysilane has the formula Si(R₁)ₐ(R₂)_{b}(OR₃)_{4-a-b},
wherein
(a) R₁ is an organic residue containing at least one dicyclopentenyl group and is bound to the silicon via a carbon atom;
(b) R₂ is an organic residue bound to the silicon via a carbon atom;
(c) R₃ is an organic residue;
(d) "a" is an integer from 1 to 3;
(e) "b" is an integer from 0 to 2; and
(f) the sum of "a" and "b" is an integer from 1 to 3.

14. The method of claim 9,
wherein said binder polymer contains at least one functional group that is autoxidizable or reactive with compounds formed during the oxidation of said autoxidizable alkoxysilane.

15. The method of claim 9,
wherein said functional group is a 1,3-dicarbonyl group.

16. The method of claim 15,
wherein said 1,3-dicarbonyl functionality is derived from the residue of acetoacetoxyethyl methacrylate.

17. An autoxidizable silane having the formula Si(R₁)ₐ(R₂)_{b}(OR₃)_{4-a-b},
wherein
(a) R₁ is an organic residue containing at least one autoxidizable group and is bound to the silicon via a carbon atom;
(b) R₂ is an organic residue bound to the Si via a C atom;
(c) R₃ is an organic residue;
(d) "a" is an integer from 1 to 3;
(e) "b" is an integer from 0 to 2; and
(f) the sum of "a" and "b" is an integer from 1 to 3.

18. The composition of claim 17,
wherein said autoxidizable group is -CH=CHCH₂CH=CH- or -CH=CH-CH=CH-.

19. The composition of claim 17,
wherein said autoxidizable group is cyclopentenyl.
